# EUROPÄISCHE PATENTSCHRIFT

(11) **EP 3 635 264 B1**
(45) Veröffentlichungstag und Bekanntmachung des Hinweises auf die Patenterteilung: **12.10.2022**
(21) Anmeldenummer: 18730734.3
(22) Anmeldetag: 08.06.2018
(51) Int. Cl.: F16B 2/12

(54) **SENSORMODUL UND HALTERUNG EINES SENSORMODULS ZUR VERWENDUNG IN EINEM LAGER- ODER TRANSPORTSYSTEM**
SENSOR MODULE AND SENSOR MODULE MOUNTING FOR USE IN A STORAGE OR TRANSPORT SYSTEM
MODULE DE DÉTECTION ET DISPOSITIF DE FIXATION D'UN MODULE DE DÉTECTION DESTINÉ À ÊTRE UTILISÉ DANS UN SYSTÈME DE STOCKAGE OU DE TRANSPORT

(30) Priorität: 08.06.2017 DE 202017103460 U
(43) Veröffentlichungstag der Anmeldung: 15.04.2020
(73) Patentinhaber: Steute Technologies GmbH & Co. KG., 32584 Löhne (DE)
(72) Erfinder: HOLLERT, André, 31603 Diepenau (DE); BOTH, Carsten, 32429 Minden (DE)
(74) Vertreter: Kleine, Hubertus
(86) Internationale Anmeldenummer: PCT/EP2018/065150
(87) Internationale Veröffentlichungsnummer: WO 2018/224647

(56) Entgegenhaltungen:
- WO-A1-02/29259
- AU-B2- 583 274
- DE-U1-202007 012 926

## Beschreibung

Die Erfindung betrifft eine Halterung eines Sensormoduls zur Verwendung in einem Lager- oder Transportsystem zur Befestigung des Sensormoduls an einem Träger des Lager- oder Transportsystems, wobei die Halterung eine Klemmvorrichtung aufweist, mit der sie an dem Träger festklemmbar ist. Die Erfindung betrifft weiterhin ein Sensormodul zur Verwendung in einem Lager- oder Transportsystem mit einer derartigen Halterung.

In modernen Produktionsanlagen werden ebenso wie im Bereich der Logistik Lager- oder Transportsysteme für Materialbehälter eingesetzt, bei denen ein Materialtransport bzw. ein Materialbestand möglichst automatisiert erfasst und überwacht wird. Solche Lager- oder Transportsysteme umfassen Regalanordnungen ebenso wie Transportbänder, über die Materialbehälter zugeführt oder entnommen werden, beispielsweise um Material zu versenden, weiterzuverarbeiten oder einzulagern. Im Rahmen der Anmeldung sind dabei unter einem "Materialbehälter" Kästen zur Aufnahme von Stück- oder Schüttgut ebenso zu verstehen wie Schalen, Paletten oder dergleichen.

Zur Detektion eines Materialbehälters ist beispielsweise aus der Druckschrift DE 20 2007 012 926 U1 ein Sensormodul mit einem Schalter bekannt, bei dem eine in einer Halterung schwenkbar gelagerte Wippe so angeordnet ist, dass sie von einem entsprechend positionierten Materialbehälter verschwenkt wird. Die Wippe ist mechanisch mit einem Betätigungselement eines an der Halterung befestigten Schalters gekoppelt, der so bei der Schwenkbewegung der Wippe betätigt wird. Die Wippe stellt damit einen Tastkopf der Anordnung dar. Dabei ist eine Klemmvorrichtung beschrieben, mit deren Hilfe die Halterung der Wippe an einen Träger des Lager- oder Transportsystems klemmend befestigt werden kann. Ein solcher Träger des Lager- oder Transportsystems kann beispielsweise eine sogenannte Rollenbahn sein, bei der in einem u-förmigen Träger eine Mehrzahl von Rollen drehbar angeordnet ist, auf die Materialbehälter aufgesetzt sind. Die Klemmvorrichtung der Druckschrift DE 20 2007 012 926 U1 umfasst einen Befestigungswinkel, der mit einem Langloch versehen ist und über eine Befestigungsschraube an einem Grundkörper der Halterung befestigt ist. Bei gelöster Schraube wird der Träger des Lager- und Transportsystems zwischen einem freien Schenkel des Befestigungswinkels und dem Grundkörper der Halterung eingeklemmt. In dieser von Hand vorgespannten Position wird dann die Halterung durch Anziehen der genannten Schraube fixiert. Die Länge des freien Schenkels ist dabei an die Höhe des Trägers angepasst, wobei kleinere Höhenunterschiede ggf. durch ein eingelegtes Moosgummielement ausgeglichen werden können. Bezüglich der Breite ist die Anordnung aufgrund der Verschiebbarkeit des Befestigungswinkels am Grundelement durch das Langloch flexibel.

Nachteilig ist dabei jedoch die komplizierte Handhabung, bei der Grundelement und Befestigungswinkel gegeneinander verspannt werden müssen und währenddessen durch Anziehen der Schraube in dieser Position fixiert werden müssen. Oft ist der Einbauplatz für das Sensormodul an z.B. einer Rollenbahn als Träger beschränkt und die Schraube zum Befestigen des Befestigungswinkels am Grundelement mit einem Werkzeug nur schwer zugänglich.

Die Druckschrift AU 583 274 B2 beschreibt einen Halter mit einem Grundkörper und einem Haken, der über eine Rastlasche verschiebbar mit dem Grundkörper verbunden ist. Grundkörper und Haken können an ein Profil angesetzt und gegeneinander verspannt werden, um den Halter an dem Profil festzulegen. Dieses setzt jedoch ein geeignetes Profil voraus, in das der Haken eingehängt werden kann.

Aus der Druckschrift WO 02/29259 A1 ist ein Halter z.B. für Lampen oder Anspitzer bekannt, der werkzeuglos an einer (Tisch-) Platte befestigt werden kann. Der Halter weist zwei gegeneinander verschiebbare Zungen auf, die auf gegenüberliegende Flächen der Platte geklemmt werden können. Die Zungen sind verschiebbar zueinander geführt, wobei im Bereich einer Schiebeführung ausgebildete Rastzähne so ineinandergreifen, dass die Zungen nur aufeinander zu bewegt werden können.

Ein nach diesem Prinzip werkzeuglos montierbarer Halter könnte auch zur Halterung eines Sensormoduls eingesetzt werden. Ein spielfreier Sitz des Halters ist jedoch nicht gewährleistet, was für ein Sensormodul nachteilig ist.

Es ist daher eine Aufgabe der vorliegenden Erfindung, eine Halterung eines Sensormoduls bzw. ein Sensormodul mit einer solchen Halterung zu schaffen, bei denen eine Montage an einem Träger des Lager- oder Transportsystems flexibel in Hinblick auf die Abmessung des Trägers, spielfrei und schnell und werkzeuglos erfolgen kann.

Diese Aufgabe wird durch eine Halterung gemäß Anspruch 1 bzw. ein Sensormodul gemäß Anspruch 16 mit den jeweiligen Merkmalen gelöst. Vorteilhafte Ausgestaltungen und Weiterbildungen sind Gegenstand der abhängigen Ansprüche. Dabei umfasst die Klemmvorrichtung mindestens einen linear verschiebbar geführten und in einer Mehrzahl von Rastpositionen einrastenden Schlitten. Aufgrund der Mehrzahl an Rastpositionen kann eine Klemmung an dem Träger durch die Klemmvorrichtung durch ein Verschieben des Schlittens erfolgen, ohne dass ein Werkzeug benötigt würde, um die Klemmvorrichtung dann in der gewünschten Position zu fixieren. Auf diese Weise kann ein Festlegen der Halterung des Sensormodus und damit des Sensormoduls einfach und ohne Werkzeug erfolgen. Die Verschiebbarkeit und die Mehrzahl an Rastpositionen erlauben eine flexible Anpassung an Träger unterschiedlicher Abmessungen. An der Halterung ist eine Führung angeordnet oder ausgebildet, in der der mindestens eine Schlitten geführt ist. Die Führung weist bevorzugt mindestens eine Nut auf, durch die eine T-förmige oder eine Schwalbenschwanz-förmige Führung gebildet ist. Beispielsweise können zwei parallel und voneinander beabstandete Nuten gemeinsam eine T-förmige Führung bilden, in der der Schlitten geführt ist. Derartige kann die Führung vorteilhaft mit dem Grundkörper der Halterung einstückig ausgebildet sein und z.B. in einem Spritzgussverfahren hergestellt sein.

Die Führung und der Schlitten weisen eine Mehrzahl von ineinander greifenden Rastzähnen auf, durch die die Rastpositionen gebildet sind. Die Rastzähne der Führung können beispielsweise zwischen parallelen und voneinander beabstandeten Nuten angeordnet sein. Bevorzugt sind die Rastzähne sägezahnförmig ausgebildet, so dass eine Bewegung in eine Richtung möglich ist, in die andere Richtung aber verhindert ist. Der Schlitten kann so zum Festklemmen des Trägers an diesen herangeschoben werden und verrastet ohne die Notwendigkeit einer manuellen Fixierung. Um die Rastzähne sicher ineinander greifen zu lassen kann an dem Schlitten ein Federelement ausgebildet sein, das den Schlitten entsprechend in die Führung drückt. Das Federelement kann beispielsweise eine ausgestellte federnde Zunge sein, die innerhalb der Nut an dem Schlitten angeordnet oder angeformt ist.

Erfindungsgemäß zeichnet sich die Halterung dadurch aus, dass an dem Schlitten ggf. zusätzlich zu dem genannten Federelement eine Feder ausgebildet ist, die zum Ausgleich von Spiel gegen den Träger drückt. Insbesondere bei einer Geometrie des Trägers, bei der dieser in dem Bereich, in dem die Feder angreift, schmaler ist als in anderen Bereichen, wird so ein mögliches Verkippen der Halterung gegenüber dem Träger um ihre Längsachse verhindert.

In einer weiteren vorteilhaften Ausgestaltung der Halterung weist der Schlitten an der den Rastzähnen der Führung zugewandten Seite einen Abschnitt ohne Rastzähne auf, um durch ein Verkippen des Schlittens diesen aus den Rastpositionen hebeln zu können. Dabei sind bevorzugt an dem Schlitten Griffelemente ausgebildet, um den Schlitten verkippen zu können. Die Griffelemente umfassen beispielsweise eine Grifföse und/oder eine Drucklasche, um den Schlitten mit zwei Fingern einer Hand werkzeuglos verkippen und damit aus der Verrastung hebeln zu können.

In einer weiteren vorteilhaften Ausgestaltung der Halterung ist an dem Schlitten ein Element angeordnet, mit dem der Träger umfasst werden kann. Bevorzugt umfasst das Element eine weitere Führung, die einen weiteren Schlitten linear verschiebbar führt, wobei weiter bevorzugt auch bei der weiteren Führung eine Mehrzahl von Rastpositionen für den weiteren Schlitten vorhanden ist und wobei der weitere Schlitten einen Klemmabschnitt zur Anlage an dem Träger aufweist.

Vergleichbar mit der zuvor genannten Anordnung von Führung und Schlitten weisen bevorzugt auch die weitere Führung und der weitere Schlitten ineinander greifende Rastzähne auf, durch die die Rastpositionen gebildet sind.

Bevorzugt sind die Führung und die weitere Führung quer, insbesondere senkrecht zueinander ausgerichtet. Dadurch können flexibel Träger unterschiedlicher Breite und Höhe umfasst und eingeklemmt werden.

Weiter bevorzugt weist ein Grundkörper der Halterung mit ein hakenförmiges Element zum Einhaken in einen Rand des Trägers auf. So kann die Halterung zunächst an den Rand des Trägers eingehängt werden, korrekt positioniert werden und dann durch Verschieben des oder der Schlitten am Träger fixiert werden.

In einer weiteren vorteilhaften Ausgestaltung der Halterung sind der Grundkörper mit der Führung, der Schlitten, ggf. mit der weiteren Führung und/oder der weitere Schlitten mit dem Klemmabschnitt jeweils einteilig aus Kunststoff hergestellt. Die gesamte dargestellte Halterung kann so aus nur wenigen Einzelteilen zusammengesetzt werden. Um Schutz vor elektrostatischen Entladungen zu bieten, kann leitfähiger Kunststoff verwendet werden und/oder eine leitfähige Beschichtung aufgebracht werden.

Ein erfindungsgemäßes Sensormodul zur Verwendung in einem Lager- oder Transportsystem zeichnet sich durch eine derartige Halterung aus, um klemmend an einem Träger des Lager- oder Transportsystems montiert werden zu können. Es ergeben sich die im Zusammenhang mit der Halterung beschriebenen Vorteile.

Die Erfindung wird nachfolgend eines Ausführungsbeispiels mit Hilfe von Figuren näher erläutert. Die Figuren zeigen:
- Fig. 1: eine isometrische Darstellung eines Sensormoduls, das an einer Rollenbahn eines Lager- oder Transportsystems befestigt ist
- Fig. 2: eine geöffnet dargestellte Wippe des Sensormoduls gemäß Fig. 1 in einer isometrischen Darstellung;
- Fig. 3, 4: zwei verschiedene isometrische Darstellungen der Halterung des Sensormoduls gemäß Fig. 1 ohne eingesetzte Wippe aus unterschiedlichen Blickrichtungen; und
- Fig. 5: eine isometrische Schnittdarstellung der Halterung gemäß den Fig. 3 und 4.

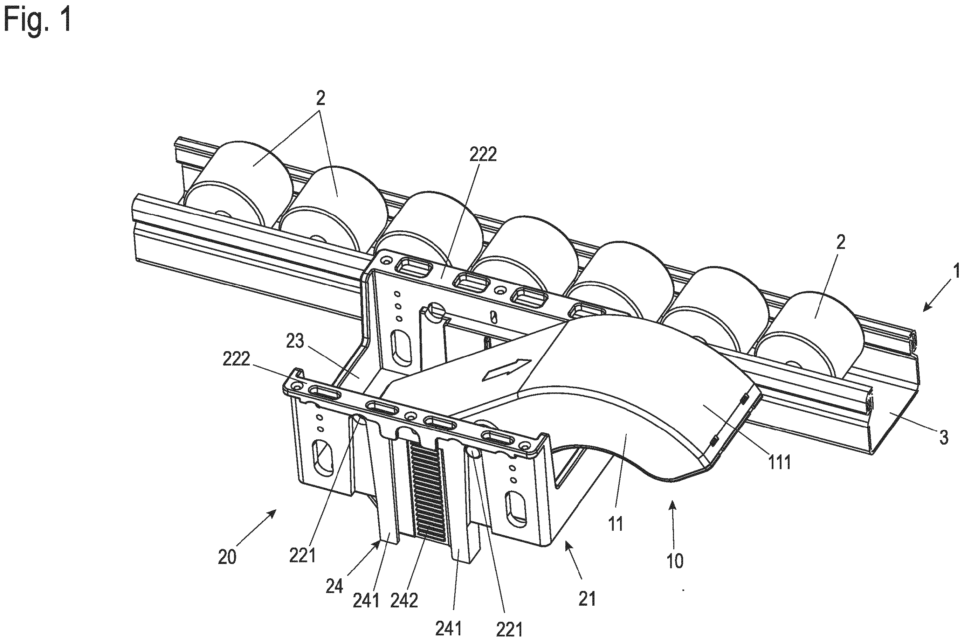

Fig. 1 zeigt in einer isometrischen Schrägansicht von schräg oben ein anmeldungsgemäßes Sensormodul, montiert an einer Rollenbahn 1. Die Rollenbahn 1 weist eine Mehrzahl von hintereinander angeordneten Rollen 2 auf, die in einem u-förmigen Träger 3 drehbar gelagert sind. Derartige Rollenbahnen 1 werden häufig in Lager- oder Transportsystemen eingesetzt, um aufgesetzte Materialbehälter, beispielsweise Materialkästen, leicht verschiebbar aufzunehmen.

In der Regel sind mindestens zwei derartige Rollenbahnen 1 parallel zueinander angeordnet, wobei das Sensormodul dann bevorzugt zwischen den Rollenbahnen 1 montiert ist. Ein Transport der Materialbehälter kann auch auf nur einer Rollenbahn 1 erfolgen, wobei in dem Fall in der Regel breitere Rollen, dann auch Walzen genannt, eingesetzt werden. Eine Seitenführung für die sich entlang der Rollenbahn 1 bewegenden Materialbehälter kann durch einen Führungssteg am Materialbehälter gegeben sein, der an den Rändern der nach oben aus der Rollenbahn 1 hervorstehenden Rollen 2 geführt wird. Es wird angemerkt, dass die in der Fig. 1 gezeigte Anordnung in ganz ähnlicher Weise auch mit Gleitschienen statt Rollenbahnen zur Führung der Materialbehälter umsetzbar ist.

Das dargestellte Sensormodul umfasst eine Halterung 20, in der eine (Schalt-) Wippe 10 um eine horizontale Achse verschwenkbar gelagert ist.

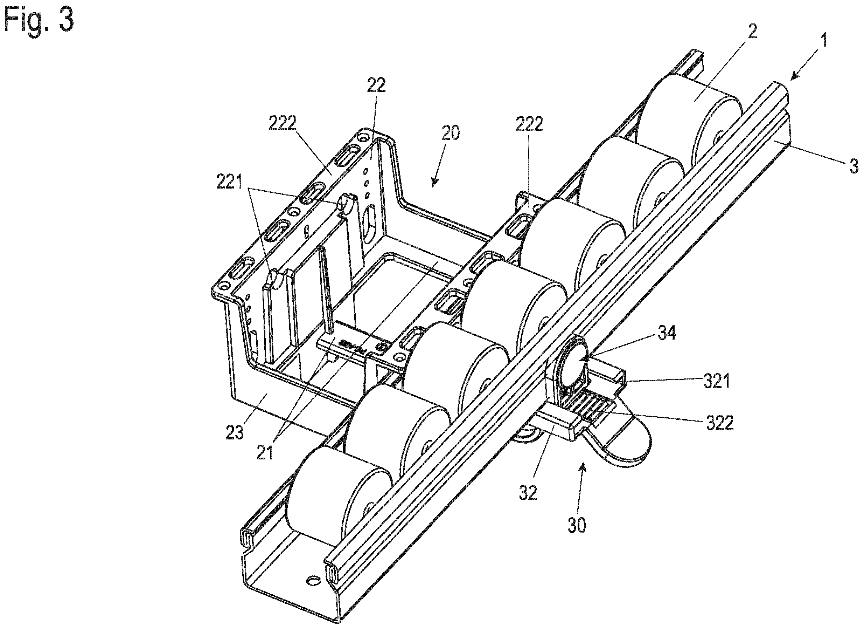

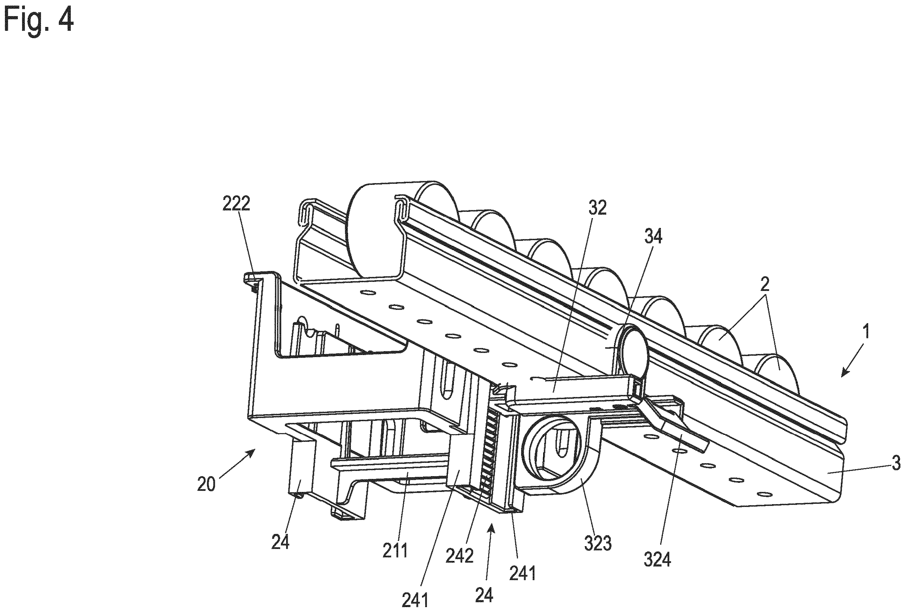

Die Wippe 10 weist ein Gehäuse 11 auf, das an einer Unterseite von einem Deckel 12 verschlossen ist. Der innere Aufbau der Wippe 10 wird in Zusammenhang mit den Fig. 3 und 4 näher erläutert.

Die Wippe 10 hat einen quaderförmigen Abschnitt, der sich im Bereich der Halterung 20 befindet. Nach oben und zu einer Seite aus der Halterung 20 heraus ragt ein gekrümmter Abschnitt der Wippe 10 hervor, der in etwa die Form eines Segments eines Zylinderrings mit rechteckigem Querschnitt hat. An der Oberseite ist die Wippe 10 entsprechend durch einen konvex verlaufenden Abschnitt des Gehäuses 11 begrenzt, der eine Abtastfläche 111 für einen Materialbehälter bildet.

Die Halterung 20 weist einen u-förmigen Grundkörper auf, mit einer horizontal angeordneten Basis 21 sowie zwei Seitenschenkeln 22. In beiden Seitenschenkeln 22 sind gegenüberliegend Lagerstellen 221 ausgebildet, in denen die Wippe 10 mit hier nicht sichtbaren Lagerzapfen schwenkbar gelagert ist. Bei der dargestellten Halterung 20 sind zwei Paare von gegenüber liegenden Lagerstellen 221 vorgesehen. In Längsrichtung der Halterung 20, die horizontal und senkrecht zur Schwenkachse verläuft, sind die beiden Paare der Lagerstellen 221 außermittig in einem linken und rechten Bereich der Halterung 20 angeordnet. Die gezeigten Paare der Lagerstellen 221 können alternativ eingesetzt werden, je nachdem in welche Richtung die Wippe 10 in die Lagerung 20 eingesetzt wird. Beim dargestellten Beispiel der Fig. 1 ist die Wippe 10 in das in der Figur rechte Paar der Lagerstellen 221 eingesetzt und ragt mit der Abtastfläche 111 nach rechts über die Halterung 20 hinaus.

Neben der Basis 21 sind Seitenteile 23 bei dem Grundkörper der Halterung 20 vorgesehen, die die beiden Seitenschenkel 22 miteinander verbinden und der Halterung 20 Stabilität geben. Die Seitenteile 23 stellen darüber hinaus einen Anschlag für die Wippe 10 dar.

Das Sensormodul ist so im Bereich der Rollenbahn 1 angeordnet, dass ein auf die Rollenbahn aufgesetzter oder über die Rollenbahn 1 rollender Materialbehälter sich über der Halterung 20 befindet. Wie die Fig. 1 zeigt, ragt die Wippe 10 mit der Abtastfläche 111 über die Höhe der Rollen 2 hinaus. Ein aufgesetzter Materialbehälter drückt die Wippe 10 an ihrer Abtastfläche 111 nach unten und verschwenkt sie somit im Uhrzeigersinn (bei Blick auf die Anordnung der Fig. 1).

Hat der Materialbehälter das Sensormodul passiert oder wurde von der Rollenbahn 1 entnommen, richtet sich die Wippe 10 wieder in die in Fig. 1 dargestellte Stellung auf. Das Aufrichten erfolgt bevorzugt schwerkraftbedingt, was z.B. dadurch erreicht werden kann, dass ein Massenschwerpunkt der Wippe 10 nicht im Bereich der Abtastfläche 111 liegt, sondern in dem von der Abtastfläche 111 aus gesehen jenseits der Lagerzapfen liegenden Teil der Wippe 10. Die Schwenkbewegung der Wippe 10 wird erfasst um das Passieren oder das Vorhandensein des Materialbehälters zu detektieren.

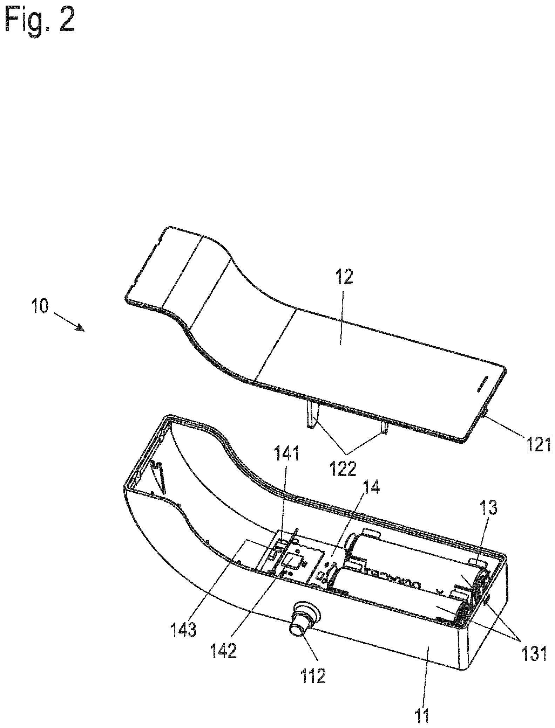

Die Funktionsweise der Wippe 10 und das Detektieren des Materialbehälters wird nachfolgend im Zusammenhang mit Fig. 2 näher erläutert.

Fig. 2 stellt die Wippe 10 in einer isometrischen Darstellung ohne die Halterung 20 da, wobei der Deckel 12 vom Gehäuse 11 abgehoben ist, um Einblick in den inneren Aufbau der Wippe 10 zu erhalten. Die Wippe 10 ist in Fig. 2 mit Blick auf die Unterseite der Wippe 10, also auf die der Abtastfläche 111 gegenüber liegende Seite, dargestellt.

In der Wippe 10 ist eine Batteriehalterung 13 angeordnet, zur Aufnahme von hier beispielhaft zwei Batterien 131. Weiter ist in dem Gehäuse 11 der Wippe 10 eine Platine 14 angeordnet, die elektronische Komponenten aufnimmt, insbesondere einen Beschleunigungssensor 141, eine Auswerteeinheit 142 und eine Übertragungseinrichtung 143 zur drahtlosen Übertragung von Signalen zu einem hier nicht dargestellten Empfänger. Die Übertragungseinrichtung 143 umfasst zumindest einen Sender, bevorzugt zudem einen Empfänger, um Signale auch bidirektional übertragen zu können bzw. um Handshake-Verfahren bei einer Übertragung von Daten (i.e. digitalen Signalen) zu ermöglichen.

Die Übertragungseinrichtung 143 nutzt bevorzugt eines der freigegebenen Frequenzbänder für die sogenannte ISM (Industrial, Scientific, Medical)-Verwendung, beispielsweise im Bereich von 433 MHz (Megahertz), 868 MHz oder 2,4 GHz (Gigahertz). Dabei kann ein standardisiertes Übertragungsprotokoll, beispielsweise gemäß dem Bluetooth oder Zigbee-Standard verwendet werden oder ein proprietäres Protokoll. Bevorzugt wird ein Protokoll eingesetzt, das mit einem niedrigen Energiebedarf einhergeht, z.B. Bluetooth-LE (Low Energy), so dass eine Versorgung des Funksensormoduls durch die Batterien 131 mit langer Standzeit, bevorzugt im Bereich von mehreren Jahren mit einem Batteriesatz, möglich ist.

In Fig. 2 ist gut erkennbar, dass der Bereich des Gehäuses 11, der sich in dieser Abbildung rechts von den Lagerzapfen 112 befindet, die Batteriehalterung 13 mit den Batterien 131 aufnimmt, wohingegen im Bereich links der Lagerzapfen 112 bis auf Teile der Platine 14 im Wesentlichen leer ist. Dieses führt zu einer Gewichtsverteilung, durch die die Wippe 10 innerhalb der Halterung 20 in die Ruhelage verschwenkt, ohne dass hierfür Rückstellkräfte einer Feder notwendig wären. Alternativ oder zusätzlich oder in bestimmten Einbaulagen kann eine Feder vorgesehen sein, um die Wippe 10 in die Ruhelage zu bewegen.

Der Deckel 12 wird bevorzugt auf das Gehäuse 11 aufgeclipst. Zu diesem Zweck sind Rastmittel 121 an zwei oder mehr Seitenkanten des Deckels 12 ausgebildet, die in entsprechende Gegenrastelemente des Gehäuses 11 eingreifen.

An der Innenseite des Deckels 12 sind Haltestege angeordnet, die bei einem Verschließen des Gehäuses 11 mit dem Deckel 12 auf eingesetzte Batterien 131 und auf die Platine 14 drücken, um diese in Position zu halten. Zur Platzierung der Platine 14 sind mit den Haltestegen 122 vergleichbare Führungselemente in dem Gehäuse 11 ausgebildet. Die Kombination dieser Führungselemente und der Haltestege 122 fixiert die Platine 14 und damit auch den Batteriehalter 13 derart, dass die Platine 14 lediglich in das Gehäuse 11 eingelegt werden braucht. Auf diese Weise kann eine defekte Platine 14 leicht ausgetauscht werden.

Bevorzugt sind alle mechanischen, elektromechanischen, elektrischen und/oder elektronischen Komponenten, die zur Detektion einer Bewegung der Wippe 10 und der Weiterleitung der Information über die Bewegung der Wippe 10 dienen, in oder an der Wippe 10 selbst angeordnet. Auf diese Weise wird ein sehr einfaches System geschaffen, bei dem - abgesehen von der Lagerung der Wippe 10 in der Halterung 20 - keine mechanische Wirkverbindung zwischen der Wippe 10 und der Halterung 20 notwendig ist.

Bei einer Installation oder Wartung des Funksensormoduls kann auf einfache Weise die Halterung 20 mit Hilfe einer weiter unten näher beschriebenen Klemmvorrichtung an der gewünschten Stelle befestigt werden und die Wippe 10 eingesetzt oder ausgetauscht werden. Durch ein Austauschen der Wippe 10 sind alle aktiven Komponenten tauscht, so dass die Funktionsfähigkeit des Funksensormoduls unmittelbar wiederhergestellt ist. Das System ist entsprechend servicefreundlich.

Bei dem dargestellten Ausführungsbeispiel erfolgt eine Lage- bzw. Winkelerkennung der Wippe 10 mithilfe des genannten Beschleunigungssensors 141. Der Beschleunigungssensor 141 kann beispielsweise als ein mikroelektromechanisches System (MEMS) ausgebildet sein. In dieser Ausgestaltung ist der Beschleunigungssensor 141 platzsparend und auch kostengünstig erhältlich. Derartige MEMS-Beschleunigungssensoren sind vielfältig in Mobilgeräten wie Smartphones oder Tablet-Computern verbaut und aufgrund der großen Stückzahl dieser Geräte kostengünstig.

Signale des Beschleunigungssensors 141 werden ggf. nach einer Vorverarbeitung von der Auswerteeinheit 142 ausgewertet. Eine Vorverarbeitung kann eine Filterung und/oder Vorverstärkung beinhalten. Die Auswerteeinheit 142 umfasst bevorzugt einen Mikrocontroller.

Aus den Informationen des Beschleunigungssensors 141 wird entweder eine Schwenkstellung der Wippe 10 und/oder eine Änderung der Winkelstellung der Wippe 10 bestimmt, aus der abgeleitet wird, ob ein Materialbehälter sich im Bereich des Sensormoduls befindet.

Alternativ zu der beschriebenen Lage- bzw. Bewegungserkennung der Wippe 10 mit Hilfe des Beschleunigungssensors 141 kann an der Wippe ein mechanischer Schalter zur Erfassung der Lage der Wippe angeordnet sein. Auch ist es möglich, ein Schalter im Bereich der Halterung 20 zu montieren, der von der Wippe 10 betätigt wird.

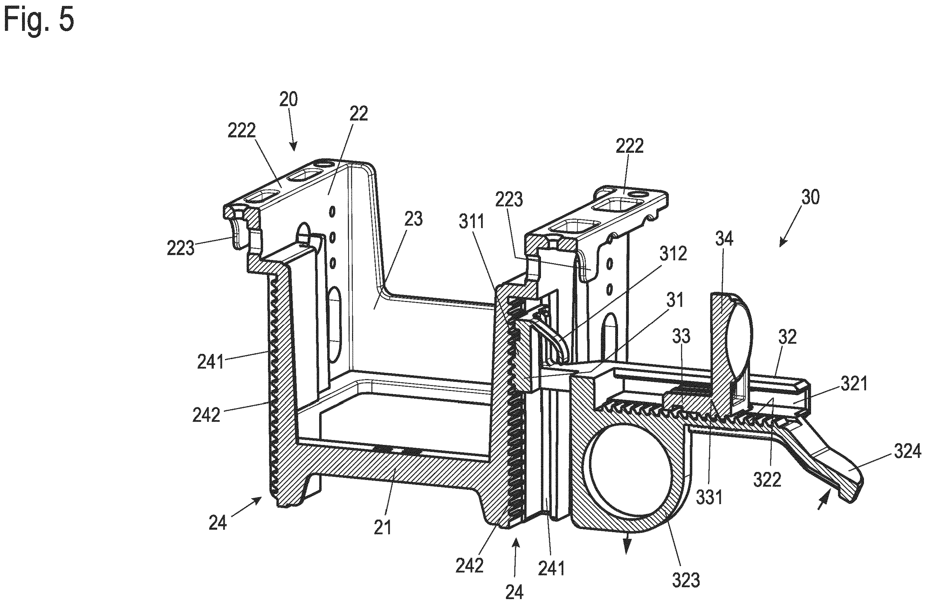

Anmeldungsgemäß weist die Halterung 20 eine Klemmvorrichtung 30 auf, um an dem Träger des Lager- und Transportsystems, hier beispielhaft dem Träger 3 der Rollenbahn 1, montiert zu werden. Details der Klemmvorrichtung 30 werden nachfolgend anhand der Fig. 3 bis 5 erläutert. Die Fig. 3 und 4 zeigen die Anordnung gemäß Fig. 1 aus verschiedenen Blickrichtungen, wobei aus Gründen der Übersichtlichkeit die Wippe 10 des Sensormoduls der Fig. 1 entnommen wurde. Fig. 5 zeigt eine isometrische Schnittansicht durch die Halterung 20 mit der Klemmvorrichtung 30. Der Schnitt ist dabei in einer vertikalen Ebene senkrecht zur Transportrichtung der Rollenbahn 1 ausgeführt.

Zur Befestigung an dem u-förmigen Trägerprofil 3 weist die Halterung 20 neben der Klemmvorrichtung 30 an der Oberseite 22 ihres Grundkörpers einen seitlich überstehenden Kragen 222 auf, der an seinem Ende einen abgewinkelten Abschnitt 223 umfasst. Dieser abgewinkelte Abschnitt 223 kann über die gesamte Länge des Kragens 222 oder in Form von Laschen nur abschnittsweise ausgebildet sein.

Der Kragen 222 und der abgewinkelte Abschnitt 223 bilden ein hakenförmiges Element, das ein Einhängen des Grundkörpers der Halterung 20 außen an einer Seite des u-förmigen Trägers 3 ermöglicht. Um das Einhängen bei unterschiedlich ausgebildeten u-förmigen Trägern 3 verschiedener Rollenbahnen 1 zu ermöglichen, ist auf einer Seite des Grundkörpers der Halterung 20 der Kragen 222 breiter ausgebildet als auf der gegenüberliegenden Seite. Da der Grundkörper der Halterung 20 ansonsten spiegelsymmetrisch aufgebaut ist, kann er entsprechend so gedreht werden, dass der Kragen 222 mit der passenden Breite an die Rollenbahnen 1 angehängt wird. Zudem kann der Kragen 222 unterbrochen ausgebildet sein, dass er abgetrennt werden kann, falls keine der Seiten zu einem Träger passt, an dem das Sensormodul angeordnet werden soll. Die Halterung 20 kann dann zwar nicht mehr eingehängt werden, liegt aber mit dem Kragen 222 auf, wodurch die Position des Grundkörpers der Halterung zu dem Träger 3 ebenfalls festgelegt wird.

Mittig an beiden Schenkeln 22 des Grundkörpers der Halterung 20 ist eine senkrecht zu den Kragen 222 ausgerichtete Führung 24 angeordnet. Diese weist zwei gegenüberliegende Führungsnuten 241 auf, sowie eine Rasterung mit Rastzähnen 242 im mittleren Bereich.

Wie insbesondere Fig. 5 gut zeigt, bei der die Halterung 20 im Bereich der Führung 24 geschnitten ist, wird in die Führung 24 ein Schlitten 31 eingeschoben, der folglich in Montageposition der Halterung 20 senkrecht von unten nach oben in der Führung 24 verschoben werden kann. Der Schlitten 31 weist an seiner zu den Rastzähnen 242 zeigenden Seite ebenfalls Rastzähne 311 auf, die in die Rastzähne 242 eingreifen. In der Abbildungen nicht sichtbar ist an der gegenüberliegenden Seite des Schlittens 31 ein Federelement ausgebildet, das sich innerhalb der Nut 241 abstützt, wodurch die Rastzähne 241, 311 aufeinander gedrückt werden. Die Rastzähne 242, 311 sind mit einem Sägezahn-Profil versehen, so dass eine Bewegung des Schlittens 31 innerhalb der Führung 24 von unten nach oben leicht möglich ist, eine Bewegung zurück dagegen nur, wenn die Rastzähne 242, 311 aktiv voneinander abgehoben werden.

Aufgrund der durch die Rastzähne 241, 311 gebildeten Rastmittel kann nach Einhaken des Kragens 222 mit der Abwinklung 234 in den Träger 3 der Schlitten 31 in Richtung der Unterseite des Trägers 3 hochgeschoben werden, bis der am Schlitten 31 ausgebildete Ausleger, der als eine weitere Führung 32 ausgebildet ist, an der Unterseite des Trägers 3 anliegt und den Träger 3 zwischen sich und dem Kragen 222 einklemmt. Weiter ist am Schlitten 31 eine Feder 312 ausgebildet, die gegen den Seitenschenkel des Trägers 3 drückt. Die Feder 312 bewirkt bei einer ungünstigen Geometrie des Trägers 3 einen Spielausgleich zwischen dem Grundkörper der Halterung 20 und dem Träger 3, um ein Kippen der Halterung 20 relativ zum Träger 3 um die Längsachse der Halterung 20 zu vermeiden.

Die weitere Führung 32 ist vergleichbar wie die Führung 24 aufgebaut, mit gegenüber liegenden Nuten 321, zwischen denen wiederum Rastmittel in Form einer Mehrzahl von hintereinander liegenden Rastzähnen 322 ausgebildet sind. Anders als die Führung 24 verläuft die weitere Führung 32 in horizontaler Richtung. In die weitere Führung 32 wird ein weiterer Schlitten 33 eingesetzt, der ebenfalls mit Rastzähnen 331 und einem hier nicht sichtbaren Federelement, die sich innerhalb der Nut 321 abstützt, versehen ist. Am weiteren Schlitten 33 ist winkelartig ein nach oben stehender Klemmabschnitt 34 angeordnet, der beim Einschieben des weiteren Schlittens 33 gegen die von der Halterung 20 aus gesehen äußere Seite des Trägers 3 drückt. Die Rastzähne 322 und 331 sind ebenfalls als Sägezähne ausgebildet, die ein Einfahren des weiteren Schlittens 33 ermöglichen, aber verhindern, dass dieser wieder zurück rutscht. Entsprechend kann durch Andrücken des Klemmabschnitts 34 an den Träger 3 dieser zwischen dem Schenkel 22 und dem Klemmabschnitt 34 eingeklemmt werden. Durch Abheben der Rastzähne 331 von den Rastzähnen 322 kann die Verrastung gelöst werden.

Ohne Werkzeug lässt sich somit durch die beiden Führungen 24. 32 und die darin verschiebbaren Schlitten 31 und 33 der Träger 3 passgenau umgreifen und einklemmen, um die Halterung 20 am Träger 3 zu montieren. Der Verfahrweg der Schlitten 31, 33 innerhalb der Führung 24, 32 gibt dabei Flexibilität, um unterschiedlich hohe bzw. breite Träger 3 einklemmen zu können.

Um die Klemmung der Halterung 20 an den Träger 3 auch ohne Werkzeug wieder lösen zu können, sind insbesondere am Schlitten 31 die Rastzähne 311 nur in einem unteren Bereich des Schlittens 31 ausgebildet. Beim Verkippen des Schlittens 31 gegen den Uhrzeigersinn liegt der obere Teil des Schlittens 31 auf den Rastzähnen 311 oder auf der Oberfläche des Schenkels 22 im Bereich neben den Rastzähnen 311 auf und die Rastzähne 311 werden aus den Rastzähnen 242 gehebelt. Die Verrastung wird so gelöst und der Schlitten 31 kann gegenüber dem Grundkörper der Halterung 20 nach unten bewegt werden, wodurch die Klemmvorrichtung 30 vom Träger 3 gelöst werden kann.

Um das Verkippen und Lösen der Klemmvorrichtung 30 zu vereinfachen, sind an der Unterseite der weiteren Führung 32 an der dem Schlitten 31 benachbarten Seite eine Fingeröse 323 und am gegenüberliegenden freien Ende eine Drucklasche 324 als Griffelemente ausgebildet. Mit einem Finger kann in die Grifföse 323 eingegriffen werden und mit einem weiteren Finger der gleichen Hand, beispielsweise dem Daumen, von unten gegen die Drucklasche 324 gedrückt werden. Die Richtung der angewendeten Kräfte ist in der Fig. 5 durch Pfeile dargestellt. Durch diese Bewegung kann die Verrastung 30 werkzeuglos gelöst werden, um die Halterung 20 und damit das Sensormodul wieder von einer Rollenbahn 1 zu lösen.

Die dargestellten einzelnen Komponenten der Halterung 20 und insbesondere ihrer Klemmvorrichtung 30 können jeweils einteilig aus Kunststoff in einem Spritzgussverfahren hergestellt sein. Die gesamte dargestellte Halterung 20 kann so aus nur drei Einzelteilen zusammengesetzt werden: dem u-förmigem Grundkörper der Halterung 20, an dem die Führung 24 ausgebildet ist; dem ersten Schlitten 31 mit der angeformten weiteren Führung 32 und den Griffelementen; und dem zweiten Schlitten 33 mit dem Klemmabschnitt 34. Um Schutz vor elektrostatischen Entladungen (ESD -electrostatic discharge) zu bieten, kann leitfähiger Kunststoff verwendet werden und/oder eine leitfähige Beschichtung aufgebracht werden.

In dem vorgestellten Beispiel ist ein Sensormodul mit (Schalt-) Wippe 10 dargestellt. Die Halterung 20 kann auch zur Halterung anderer Sensoren oder (Mess-) Geräte an einem Träger des Lager- und Transportsystems verwendet werden, als dem hier dargestellten Sensormodul zur Detektion eines Materialbehälters.

### Bezugszeichen

- 1: Rollenbahn
- 2: Rolle
- 3: Träger

- 10: Wippe
- 11: Gehäuse
- 111: Abtastfläche
- 112: Lagerzapfen
- 12: Deckel
- 121: Rastmittel
- 122: Haltesteg
- 13: Batteriehalterung
- 131: Batterie
- 14: Platine
- 141: Beschleunigungssensor
- 142: Auswerteeinheit
- 143: Übertragungseinrichtung

- 20: Halterung
- 21: Basis
- 211: Steg
- 212: Öffnung
- 22: Seitenschenkel
- 221: Lagerstelle
- 222: Kragen
- 223: Abwinklung
- 23: Seitenteil
- 24: Führung
- 241: Nut
- 242: Rastzähne

- 30: Klemmvorrichtung
- 31: Schlitten
- 311: Rastzähne
- 312: Feder
- 32: weitere Führung
- 321: Nut
- 322: Rastzähne
- 323: Grifföse
- 324: Drucklasche
- 33: weiterer Schlitten
- 331: Rastzähne
- 34: Klemmabschnitt

## Patentansprüche

1. Halterung (20) eines Sensormoduls zur Verwendung in einem Lager- oder Transportsystem zur Befestigung des Sensormoduls an einem Träger (3) des Lager- oder Transportsystems, wobei die Halterung (20) eine Klemmvorrichtung (30) aufweist, mit der sie an dem Träger (3) festklemmbar ist, wobei die Klemmvorrichtung (30) mindestens einen linear verschiebbar geführten und in einer Mehrzahl von Rastpositionen einrastenden Schlitten (31) umfasst, wobei an der Halterung (20) eine Führung (24) angeordnet oder ausgebildet ist, in der der mindestens eine Schlitten (31) geführt ist und wobei die Führung (24) und der Schlitten (31) eine Mehrzahl von ineinander greifenden Rastzähnen (242, 311) aufweisen, durch die die Rastpositionen gebildet sind,
**dadurch gekennzeichnet, dass** an dem Schlitten (31) eine Feder (312) ausgebildet ist, die zum Ausgleich von Spiel gegen den Träger (3) drücken kann.

2. Halterung (20) nach Anspruch 1, bei der die Führung (24) mindestens eine Nut (241) aufweist, durch die eine T-förmige oder eine Schwalbenschwanz-förmige Führung gebildet ist.

3. Halterung (20) nach Anspruch 1 oder 2, bei der die Führung (24) zwei parallele und voneinander beabstandete Nuten (241) aufweist, zwischen denen die Rastzähne (242) der Führung (24) angeordnet sind.

4. Halterung (20) nach einem der Ansprüche 1 bis 3, bei der die Rastzähne (242, 311) sägezahnförmig ausgebildet sind.

5. Halterung (20) nach einem der Ansprüche 1 bis 4, bei der an dem Schlitten (31) ein Federelement ausgebildet ist, das den Schlitten (31) so in die Führung drückt, dass die Rastzähnen (242, 311) ineinander greifen.

6. Halterung (20) nach einem der Ansprüche 1 bis 5, bei der der Schlitten (31) an der den Rastzähnen (241) der Führung (24) zuweisenden Seite einen Abschnitt aufweist, der keine Rastzähne (311) aufweist, um durch ein Verkippen des Schlittens (31) den Schlitten (31) aus den Rastpositionen hebeln zu können.

7. Halterung (20) nach Anspruch 6, bei der an dem Schlitten (31) Griffelemente ausgebildet sind, um den Schlitten (31) verkippen zu können.

8. Halterung (20) nach Anspruch 7, bei der die Griffelemente eine Grifföse (323) und/oder eine Drucklasche (324) umfassen.

9. Halterung (20) nach einem der Ansprüche 1 bis 8, bei der an dem Schlitten (31) ein Element angeordnet ist, mit dem der Träger (3) umfasst werden kann.

10. Halterung (20) nach Anspruch 9, aufweisend einen weiteren Schlitten (33), wobei an dem Schlitten (31) eine weitere Führung (32) ausgebildet ist, die den weiteren Schlitten (33) linear verschiebbar führt, wobei eine Mehrzahl von Rastpositionen für den weiteren Schlitten (33) vorhanden ist und wobei der weitere Schlitten einen Klemmabschnitt (34) zur Anlage an dem Träger (3) aufweist.

11. Halterung (20) nach Anspruch 10, bei der die weitere Führung (32) und der weitere Schlitten (33) ineinander greifende Rastzähne (321, 331) aufweisen, durch die die Rastpositionen gebildet sind.

12. Halterung (20) nach Anspruch 10 oder 11, bei der die Führung (24) und die weitere Führung (32) quer, insbesondere senkrecht zueinander ausgerichtet sind.

13. Halterung (20) nach einem der Ansprüche 1 bis 12, bei der ein Grundkörper der Halterung (20) ein hakenförmiges Element zum Einhaken in einen Rand des Trägers (3) aufweist.

14. Halterung (20) nach einem der Ansprüche 1 bis 13, bei der der Grundkörper mit der Führung (24), der Schlitten (31) oder der Schlitten (31) mit der weiteren Führung (32) und/oder der weitere Schlitten (33) mit dem Klemmabschnitt (34) jeweils einteilig aus Kunststoff hergestellt sind.

15. Halterung (20) nach Anspruch 14, bei der der Kunststoff ein leitfähiger Kunststoff und/oder ein Kunststoff mit einer leitfähigen Beschichtung ist.

16. Sensormodul zur Verwendung in einem Lager- oder Transportsystem, **dadurch gekennzeichnet, dass** das Sensormodul eine Halterung (20) gemäß einem der Ansprüche 1 bis 15 aufweist, um klemmend an einem Träger (3) des Lager- oder Transportsystems montiert werden zu können.

## Claims

1. Mounting (20) of a sensor module for use in a storage or transport system for fastening the sensor module to a support (3) of the storage or transport system, wherein the mounting (20) has a clamping device (30) with which it can be clamped to the support (3), wherein the clamping device (30) comprises at least one linearly displaceable guided slide (31) which engages in a plurality of latching positions, wherein a guide (24), in which the at least one slide (31) is guided, is arranged or formed on the mounting (20) and wherein the guide (24) and the slide (31) have a plurality of interlocking latching teeth (242, 311) by which the latching positions are formed, **characterized in that** a spring (312) is formed on the slide (31)that can press against the support (3) to compensate for play.

2. Mounting (20) according to claim 1, wherein the guide (24) has at least one groove (241) through which a T-shaped or a dovetail-shaped guide is formed.

3. Mounting (20) according to claim 1 or 2, wherein the guide (24) has two parallel and mutually spaced grooves (241) between which the latching teeth (242) of the guide (24) are disposed.

4. Mounting (20) according to one of the claims 1 to 3, wherein the latching teeth (242, 311) are saw-toothed in shape.

5. Mounting (20) according to one of claims 1 to 5, wherein a spring element is formed on the slide (31) for pressing the slide (31) into the guide so that the latching teeth (242, 311) engage one another.

6. Mounting (20) according to one of claims 1 to 5, wherein the slide (31) has, on the side facing the latching teeth (241) of the guide (24), a portion having no latching teeth (311) for enabling the levering of the slide (31) out of the latching positions by tilting the slide (31).

7. Mounting (20) according to claim 6, wherein handle elements are formed on the slide (31) to be able to tilt the slide (31).

8. Mounting (20) according to claim 7, wherein the handle elements comprise a handle eyelet (323) and/or a pressure tab (324).

9. Mounting (20) according to one of claims 1 to 8, wherein an element with which the support (3) can be enclosed is arranged on the slide (31).

10. Mounting (20) according to claim 9, comprising a further slide (33), wherein a further guide (32) is formed on the slide (31) which guides the further slide (33) in a linearly displaceable manner, with a plurality of latching positions for the further slide (33) being present and the further slide having a clamping section (34) for bearing against the support (3).

11. Mounting (20) according to claim 10, wherein the further guide (32) and the further slide (33) have mutually engaging latching teeth (321, 331) by which the latching positions are formed.

12. Mounting (20) according to claim 10 or 11, wherein the guide (24) and the further guide (32) are aligned transversely, in particular perpendicularly to one another.

13. Mounting (20) according to one of claims 1 to 12, wherein a base body of the mounting (20) comprises a hook-shaped element for hooking into an edge of the support (3).

14. Mounting (20) according to one of claims 1 to 13, in which the base body with the guide (24), the slide (31) or the slide (31) with the further guide (32) and/or the further slide (33) with the clamping section (34) are each produced integrally from plastic.

15. Mounting (20) according to claim 14, wherein the plastic is a conductive plastic and/or a plastic with a conductive coating.

16. Sensor module for use in a storage or transport system, **characterized in that** the sensor module comprises a mounting (20) according to one of claims 1 to 15 for being mounted in a clamping manner on a support (3) of the storage or transport system.

## Revendications

1. Dispositif de maintien (20) d'un module de capteur destiné à être utilisé dans un système de stockage ou de transport pour la fixation du module de capteur sur un support (3) du système de stockage ou de transport, le dispositif de maintien (20) présentant un dispositif de serrage (30) avec lequel il peut être serré sur le support (3), le dispositif de serrage (30) comprenant au moins un chariot (31) guidé de manière à pouvoir se déplacer linéairement et s'encliquetant dans une pluralité de positions d'encliquetage, un guide (24) étant disposé ou formé sur le dispositif de maintien (20), dans lequel ledit au moins un chariot (31) est guidé, et le guide (24) et le chariot (31) présentant une pluralité de dents d'encliquetage (242, 311) s'engrenant les unes dans les autres, par lesquelles les positions d'encliquetage sont formées,
**caractérisé en ce qu'**un ressort (312) est formé sur le chariot (31), lequel peut presser contre le support (3) pour compenser le jeu.

2. Dispositif de maintien (20) selon la revendication 1, dans lequel le guide (24) présente au moins une rainure (241), par laquelle un guide en forme de T ou de queue d'aronde est formé.

3. Dispositif de maintien (20) selon la revendication 1 ou 2, dans lequel le guide (24) présente deux rainures (241) parallèles et espacées l'une de l'autre, entre lesquelles sont disposées les dents d'encliquetage (242) du guide (24).

4. Dispositif de maintien (20) selon l'une des revendications 1 à 3, dans lequel les dents d'encliquetage (242, 311) sont réalisées en forme de dents de scie.

5. Dispositif de maintien (20) selon l'une des revendications 1 à 4, dans lequel un élément élastique est formé sur le chariot (31), lequel presse le chariot (31) dans le guide de telle sorte que les dents d'encliquetage (242, 311) s'engrènent les unes dans les autres.

6. Dispositif de maintien (20) selon l'une des revendications 1 à 5, dans lequel le chariot (31) présente, sur le côté tourné vers les dents d'encliquetage (241) du guide (24), une partie qui ne présente pas de dents d'encliquetage (311) afin de pouvoir faire levier sur le chariot (31) pour le dégager des positions d'encliquetage par un basculement du chariot (31).

7. Dispositif de maintien (20) selon la revendication 6, dans lequel des éléments de préhension sont formés sur le chariot (31) afin de pouvoir faire basculer le chariot (31).

8. Dispositif de maintien (20) selon la revendication 7, dans lequel les éléments de préhension comprennent un œillet de préhension (323) et/ou une patte de pression (324).

9. Dispositif de maintien (20) selon l'une des revendications 1 à 8, dans lequel un élément permettant d'enserrer le support (3) est disposé sur le chariot (31).

10. Dispositif de maintien (20) selon la revendication 9, présentant un autre chariot (33), un autre guide (32) étant formé sur le chariot (31), lequel guide l'autre chariot (33) de manière à ce qu'il puisse se déplacer linéairement, une pluralité de positions d'encliquetage étant prévue pour l'autre chariot (33) et l'autre chariot présentant une partie de serrage (34) destinée à s'appuyer sur le support (3).

11. Dispositif de maintien (20) selon la revendication 10, dans lequel l'autre guide (32) et l'autre chariot (33) présentent des dents d'encliquetage (321, 331) s'engrenant les unes dans les autres, par lesquelles les positions d'encliquetage sont formées.

12. Dispositif de maintien (20) selon la revendication 10 ou 11, dans lequel le guide (24) et l'autre guide (32) sont orientés transversalement, en particulier perpendiculairement l'un à l'autre.

13. Dispositif de maintien (20) selon l'une des revendications 1 à 12, dans lequel un corps de base du dispositif de maintien (20) présente un élément en forme de crochet destiné à s'accrocher dans un bord du support (3).

14. Dispositif de maintien (20) selon l'une des revendications 1 à 13, dans lequel le corps de base avec le guide (24), le chariot (31) ou le chariot (31) avec l'autre guide (32) et/ou l'autre chariot (33) avec la partie de serrage (34) sont respectivement fabriqués en une seule pièce en matière plastique.

15. Dispositif de maintien (20) selon la revendication 14, dans lequel la matière plastique est une matière plastique conductrice et/ou une matière plastique avec un revêtement conducteur.

16. Module de capteur destiné à être utilisé dans un système de stockage ou de transport, **caractérisé en ce que** le module de capteur présente un dispositif de maintien (20) selon l'une des revendications 1 à 15, afin de pouvoir être monté par serrage sur un support (3) du système de stockage ou de transport.
